Europäisches Patentamt

European Patent Office

Office européen des brevets

(19)

(11) Numéro de publication : **0 396 461 B1**

# (12) FASCICULE DE BREVET EUROPEEN

(45) Date de publication du fascicule du brevet :
30.06.93 Bulletin 93/26

(51) Int. Cl.⁵ : **H04L 7/02, H04L 25/49**

(21) Numéro de dépôt : **90401166.5**

(22) Date de dépôt : **27.04.90**

(54) **Dispositif pour synchroniser un signal pseudo-binaire avec un signal d'horloge régénérée à sauts de phase.**

(30) Priorité : **03.05.89 FR 8905905**

(43) Date de publication de la demande :
07.11.90 Bulletin 90/45

(45) Mention de la délivrance du brevet :
30.06.93 Bulletin 93/26

(84) Etats contractants désignés :
**DE GB IT NL**

(56) Documents cités :
**EP-A- 0 013 990**
**EP-A- 0 016 678**
**EP-A- 0 210 395**
**US-A- 4 716 578**

(73) Titulaire : **SAT (Société Anonyme de Télécommunications)**
**6, avenue d'Iéna**
**F-75116 Paris (FR)**

(72) Inventeur : **Sillere, Eric**
**41, Rue Cantagrel**
**F-75631 Paris Cedex 13 (FR)**

(74) Mandataire : **Cabinet Martinet & Lapoux**
**BP 405**
**F-78055 Saint Quentin en Yvelines Cédex (FR)**

EP 0 396 461 B1

Jouve, 18, rue Saint-Denis, 75001 PARIS

# Description

La présente invention concerne un dispositif pour synchroniser un signal pseudo-binaire avec un signal d'horloge en un signal synchronisé sortant .

Dans la suite, les termes "signal pseudo-binaire" désignent un signal logique ayant une période nominale et comprenant des premiers et seconds éléments binaires, comme défini ci-après. Un premier élément binaire est signalé par des premier et second niveaux logiques complémentaires respectivement sensiblement pendant des première et seconde demi-périodes nominales successives. Un second élément binaire est signalé par le second niveau logique sensiblement pendant une période nominale. En outre, un premier élément binaire est toujours encadré par deux seconds éléments binaires, c'est-à-dire il succède à un second élément binaire et précède un autre second élément binaire.

Deux tels signaux pseudo-binaires sont produits par des convertisseurs bipolaires-binaires connus. Les premiers éléments binaires correspondent à des marques de polarité positive, ou bien à des marques de polarité négative dans un signal bipolaire reçu par le convertisseur.

Le signal d'horloge a une période d'horloge sensiblement inférieure à la période nominale, et offre des sauts de phase périodiques afin que le signal d'horloge ait une période moyenne quasiment égale à la période nominale. Un tel signal d'horloge peut être régénéré à partir du signal bipolaire reçu par le convertisseur en fonction d'un signal d'horloge local sans saut de phase et ayant une période sous-multiple de ladite période d'horloge régénérée.

De tels signaux pseudo-binaire et d'horloge régénérée sont établis notamment dans des circuits de synchronisation pour synchroniser des signaux plésiochrones par une méthode de justification positive en vue de les multiplexer dans un multiplexeur temporel, comme décrit dans la demande de brevet français FR-A-2564267, ou la EP-A-0165122 correspondante.

Selon la technique antérieure, le signal d'horloge local a une période strictement inférieure à la demi-période nominale du signal pseudo-binaire. Par suite, les sauts de phase qui ont une amplitude égale à une fraction de la période du signal d'horloge régénéré, interviennent pendant les premières demi-périodes nominales des éléments binaires du signal pseudo-binaire, grâce à la circuiterie logique incluse dans le circuit de synchronisation. En d'autres termes, les instants significatifs du signal d'horloge régénérée, tels que des transitions actives prédéterminées, en général du second niveau logique "0" au premier niveau logique "1", dans le signal d'horloge régénérée oscillent entre les limites des premières demi-périodes nominales afin de différencier les éléments binaires.

Par exemple, l'emploi d'une simple bascule bistable synchronisée par le signal d'horloge régénérée permet de reformer le signal pseudo-binaire en un signal synchronisé. Deux telles bascules sont incluses aux entrées d'un transcodeur HDB/binaire compris dans le circuit de synchronisation précité et produisant un signal binaire reformé correspondant au signal bipolaire reçu. La bascule permet ainsi de lire le niveau du signal pseudo-binaire pendant les demi-périodes nominales pour autant qu'il y ait identité entre l'information binaire supportée par un élément binaire et le niveau logique dans la première demi-période nominale correspondante.

Toutefois, une telle lecture est erronée si le signal pseudo-binaire est affecté d'une gigue telle que le niveau logique dans une première demi-période nominale diffère de celui correspondant à l'information binaire. Par exemple, si dans des premiers éléments binaires du signal pseudo-binaire, le second niveau logique à "0" est déjà présent à partir du second quart de la période nominale, la lecture sera fausse pour toute transition active du signal d'horloge régénérée intervenant pendant ce second quart de période.

Par ailleurs, il convient de souligner que l'emploi de la bascule bistable précitée ne permet pas de former un signal synchronisé correct lorsque les sauts de phase du signal d'horloge régénérée sont égaux ou supérieurs à la demi-période nominale. En effet, si une transition active du signal d'horloge régénérée intervient pendant une seconde demi-période nominale d'un élément binaire du signal pseudo-binaire correspondant normalement au second niveau logique "0", la transition active ne permet pas de distinguer si l'élément binaire est un premier ou un second élément binaire.

Comme on le verra dans la suite, des sauts de phase supérieurs à la demi-période nominale peuvent être imposés par des conditions de fonctionnement de composants électroniques, particulièrement afin de concilier la vitesse de fonctionnement de composants électroniques avec le débit du signal pseudo-binaire relativement élevé.

L'invention vise donc à fournir un signal pseudo-binaire synchronisé ayant un débit élevé et comportant des éléments binaires dont la largeur est calibrée au moyen d'un signal d'horloge régénérée ayant des sauts de phase supérieurs à ceux selon la technique antérieure.

A cette fin, un dispositif pour synchroniser est tel que défini et caractérisé dans la revendication 1.

Comme on le verra dans la suite, l'invention est particulièrement mise en oeuvre lorsque l'amplitude des sauts de phase du signal d'horloge est sensiblement comprise entre une demi-période et une période du signal d'horloge, bien que le dispositif pour synchroniser fonctionne également pour une amplitude de sauts de phase inférieure à la demi-période du signal d'horloge.

Selon d'autres caractéristiques de l'invention, les divers moyens fonctionnels précités sont sous la forme de composants logiques, tels que bascules et portes, afin que le dispositif soit réalisé sous la forme d'un circuit intégré. Ces composants logiques sont définis dans les revendications 2 à 7.

D'autres avantages de l'invention apparaîtront plus clairement à la lecture de la description suivante de réalisations préférées de l'invention en référence aux dessins annexés correspondants, dans lesquels :

- la Fig. 1 est un bloc-diagramme d'un multiplexeur multiplexant M signaux numériques plésiochrones, l'un des circuits de synchronisation dans le multiplexeur étant détaillé ;
- la Fig. 2 montre des formes d'onde de signaux établis dans le circuit de synchronisation et utilisés pour régénérer un signal d'horloge et synchroniser un signal pseudo-binaire relatifs à un signal plésiochrone reçu ;
- la Fig. 3 montre schématiquement un circuit de régénération de signal d'horloge inclus dans le circuit de synchronisation ;
- la Fig. 4 montre en détail l'un de deux dispositifs de synchronisation et calibrage de signal pseudo-binaire selon l'invention inclus dans le circuit de synchronisation ; et
- les Figs 5 et 6 montrent des formes d'onde de signaux établis dans les deux dispositifs de synchronisation et calibrage, respectivement.

Afin de mieux appréhender les avantages d'un dispositif de synchronisation et calibrage selon l'invention, une utilisation préférée de celui-ci est décrite dans le cadre de la synchronisation d'un signal numérique plésiochrone avec un signal d'horloge régénérée, effectuée dans un circuit de synchronisation inclus dans un multiplexeur numérique temporel. Un tel circuit de synchronisation est déjà décrit dans la demande de brevet précitée FR-A-2564267.

Le multiplexeur reçoit M signaux composants numériques plésiochrones $s_I$ à $s_M$ ayant un débit nominal faible égal à $d_0$ et les multiplexe en un signal résultant numérique R ayant un débit élevé égal à $D > (M.d_0)$. Par définition, les signaux composants $s_1$ à $s_M$ ont des débits réels $d_1$ à $d_M$ variant sensiblement de part et d'autre du débit nominal faible $d_0$ dans des limites prédéterminées en raison d'une indépendance d'horloges respectives établissant les signaux composants. Avant de procéder au multiplexage, les signaux composants $s_1$ à $s_M$ sont transformés en des signaux composants synchrones dits signaux justifiés $sj_I$ à $sj_M$ ayant un débit commun $dj = D/M$ dans des circuits de synchronisation $l_I$ à $l_M$ respectivement. Le débit $dj$ est sensiblement supérieur au débit $d_0$ et est donné par la relation :

$$dj = (I + \varepsilon) d_0$$

où $\varepsilon$ est un nombre plus petit que l'unité et est choisi de manière que le débit $dj$ soit toujours supérieur à tous les débits réels des signaux composants $s_I$ a $s_M$.

La différence entre le débit $dj$ et les débits réels $d_1$ à $d_M$ des signaux composants est comblée par des bits de remplissage appelés bits de justification selon un procédé connu de multiplexage par justification positive. En pratique, la différence de débits motivant la synchronisation des signaux composants $s_I$ à $s_M$ se traduit par une insertion systématique de bits d'indication de justification ainsi que d'un mot de verrouillage de trame et, le cas échéant, de bits de service ayant des emplacements prédéterminés respectifs dans une trame du signal résultant R. Pour un signal composant, des bits d'indication de justification sont destinés à indiquer si un bit de justification occupant un emplacement prédéterminé dans la trame est transmis ou remplacé par un bit d'information, en vue d'un démultiplexage ultérieur du signal résultant.

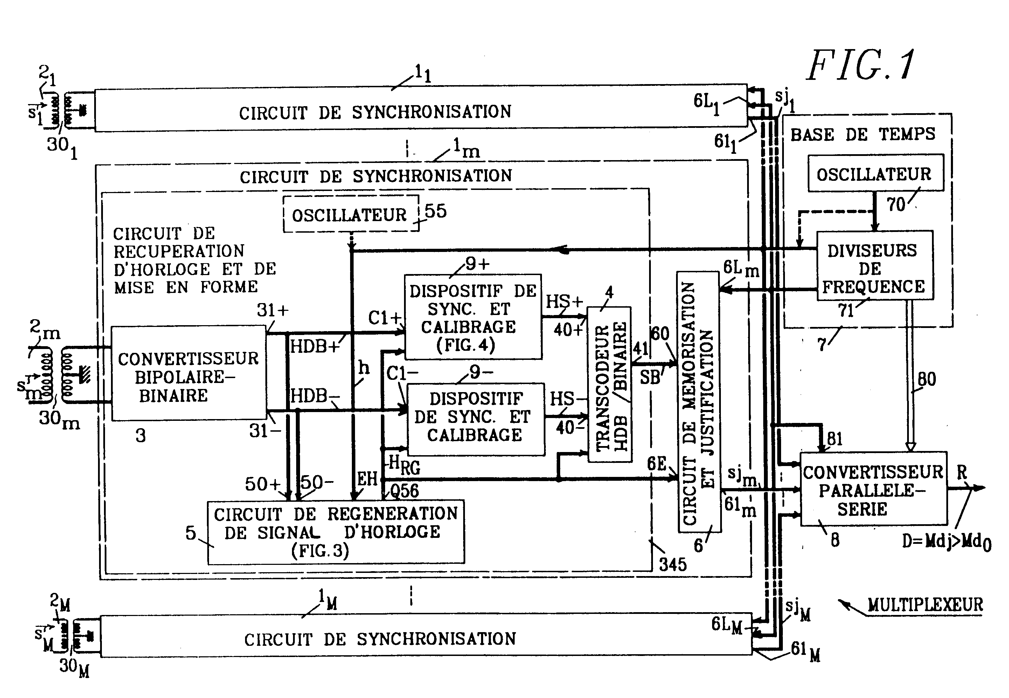

Dans la Fig. 1 est représenté en détail l'un, $l_m$, des circuits de synchronisation relatif à l'un, $s_m$, des signaux composants, où l'indice entier m est compris entre I et l'entier M. Les autres circuits de synchronisation $l_I$ à $l_M$ relatifs aux autres signaux $s_I$ à $s_M$ sont identiques au circuit $l_m$.

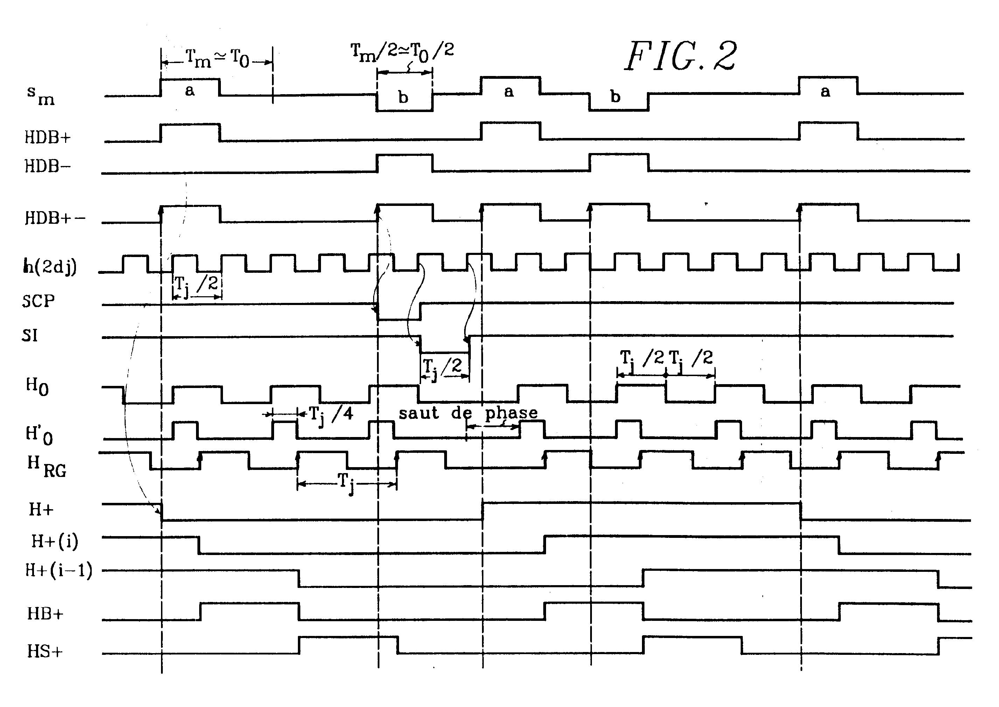

Le signal composant numérique $s_m$ est transmis en un code bipolaire à haute densité HDBn dans une ligne à paire symétrique $2_m$, ou une ligne coaxiale. Il est rappelé qu'un signal numérique en code HDBn est un signal bipolaire dans lequel un zéro binaire est codé comme un "0" et un un binaire est codé alternativement comme une marque $\underline{a}$ de polarité positive ou une marque $\underline{b}$ de polarité négative, comme montré dans une première ligne de la Fig. 2. Plus précisément, pendant une période nominale $T_0 = I/d_0 \cong T_m = I/d_m$ d'un élément binaire et en l'absence de gigue dans le signal $s_m$, un zéro bipolaire est signalé par une tension nulle, tandis que des marques $\underline{a}$ et $\underline{b}$ sont signalées par des créneaux ayant respectivement des polarités positive et négative pendant une première demi-période $T_0/2$ et par une tension nulle pendant la seconde demi-période $T_0/2$. n désigne un entier prédéterminé indiquant le nombre maximum de zéros consécutifs qui peuvent se trouver dans le signal bipolaire $s_m$. Dans une suite de (n+I) zéros consécutifs du signal binaire initial, le dernier bit est remplacé d'une manière connue par une marque de violation de bipolarité. Généralement, l'entier n est égal à 3. Le signal composant $s_m$ en code HDBn est transmis par la ligne $2_m$ à un convertisseur bipolaire-binaire 3 à travers un transformateur différentiel d'entrée $30_m$.

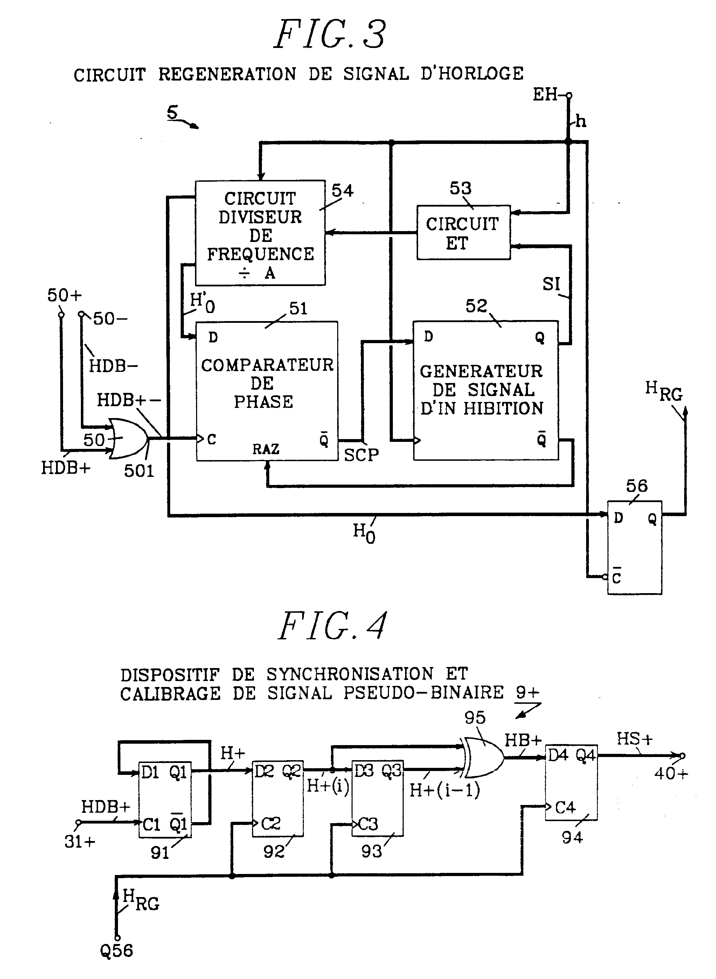

Le convertisseur 3 distingue les marques bipolaires $\underline{a}$ et $\underline{b}$ en fonction de deux couples de seuils de tension prédéterminés correspondant aux polarités positive et négative et redresse les marques négatives $\underline{b}$. Deux sorties 31+ et 31- du convertisseur 3 appliquent respectivement deux signaux pseudo-binaires HDB+ et HDB- à deux entrées 40+ et 40- d'un transcodeur HDBn/binaire 4 et à deux entrées 50+ et 50- d'une porte OU 50 incluse dans un circuit de régénération de signal d'horloge 5 montré à la Fig. 3.

Les signaux pseudo-binaires HDB+ et HDB- sont montrés dans des seconde et troisième lignes de la Fig. 2. Le signal HDB+ comprend des bits "1" qui correspondent aux marques positives $\underline{a}$ du signal codé $s_m$, et des bits "0" qui correspondent aux marques négatives $\underline{b}$ et aux zéros du signal codé $s_m$. Le signal HDB- comprend des bits "1" qui correspondent aux marques négatives $\underline{b}$ du signal codé $s_m$, et des bits "0" qui correspondent aux marques positives $\underline{a}$ et aux zéros du signal codé $s_m$. Sachant que les bits "1" étaient alternativement codés en des marques positives et négatives dans le signal bipolaire $s_m$, tout bit "1" dans l'un ou l'autre des signaux pseudo-binaires et HDB+ et HDB- est toujours précédé d'un zéro et toujours suivi d'un zéro, c'est-à-dire un bit "1" est toujours encadré par deux bits "0". A une sortie 501 de la porte OU 50, un signal HDB+- résulte de la combinaison des signaux HDB+ et HDB- et comprend tous les bits "1" de ces deux signaux, comme montré à une quatrième ligne en la Fig. 2. Dans les signaux HDB+ et HDB-, en l'absence de gigue, un bit "1" est ainsi composé d'un créneau au premier niveau logique haut pendant une première période nominale $T_m/2$, et d'un second niveau à zéro pendant une seconde période nominale $T_m/2$. Comme on le verra dans la suite, les créneaux à l'état "1" dans le signal HDB+ serviront à régénérer le signal d'horloge ayant servi à transmettre le signal $s_m$.

Le transcodeur HDBn/binaire 4 transcode les signaux HDB+ et HDB- en y détectant les viols de bipolarité et combine ces deux signaux dépourvus des viols de bipolarité en un signal reformé en code binaire SB. Une sortie 41 du transcodeur 4 transmet le signal reformé binaire SB à une fréquence de rythme moyenne égale à $d_m$ vers une entrée 60 d'un circuit de mémorisation et de justification 6. Le transcodage des signaux pseudo-binaires HDB+ et HDB- en le signal binaire SB dans le transcodeur 4 et l'écriture du signal binaire SB dans une mémoire tampon incluse dans le circuit 6 sont commandés par un signal d'horloge $H_{RG}$ régénéré par le circuit 5 et propre au signal composant $s_m$.

Ainsi, le convertisseur 3, le transcodeur 4 et le circuit 5 constituent ensemble un circuit de récupération de rythme et de mise en forme 345, appelé parfois joncteur, qui délivre le signal reçu $s_m$ sous la forme d'un signal binaire reformé SB, et un signal d'horloge $H_{RG}$ établi à partir du signal reçu $s_m$ et plus précisément à partir du signal HDB+-.

Le signal d'horloge régénéré $H_{RG}$ est synchronisé avec un signal d'horloge h produit localement par un oscillateur. La fréquence du signal d'horloge h doit remplir les conditions suivantes C1 et C2 :

C1) La fréquence du signal h doit être strictement supérieure au double de la fréquence de rythme du signal $s_m$ :

$$h = A.(l + \mu).d_m$$

où A désigne un entier supérieur ou égal à 2, et

$\mu$ désigne un nombre inférieur à 1 ;

C2) La fréquence du signal h doit être compatible avec la vitesse de fonctionnement maximum de la technologie envisagée pour intégrer le circuit de synchronisation $l_m$. Dans le cas présent, la fréquence du signal d'horloge h doit être inférieure à la fréquence maximum de fonctionnement $f_{max}$ de la technologie CMOS/1,5 $\mu$m égale à 70 MHz :

$$h < f_{max}.$$

En général, la fréquence du signal h est choisie aussi grande que possible pour que le signal d'horloge régénéré $H_{RG}$ ne soit pas affecté de sauts de phase ayant une amplitude élevée.

Si la fréquence du signal h est choisie telle que :

$$h = A.dj \text{ avec } A \geqq 2,$$

cette valeur de fréquence vérifie la condition C1 et permet d'utiliser un unique oscillateur local 70 inclus dans une base de temps 7 du multiplexeur, pour générer la fréquence d'horloge h et la fréquence de rythme D=M.dj du signal résultant R.

Toutefois, un autre oscillateur local 55, montré en traits pointillés à la Fig. 1, est utile uniquement si la fréquence du signal h est choisie différente de A.dj, c'est-à-dire $(l+\mu).d_m \neq dj$.

Par exemple, selon la demande de brevet FR-A-2564267, pour un multiplexeur qui justifie M=4 signaux plésiochrones $s_1$ à $s_4$ au débit nominal $d_0$=2048 kbit/s en quatre signaux justifiés au débit dj=2112 kbit/s, et qui multiplexe les signaux justifiés en un signal résultant R au débit D = M.dj = 8448 kbit/s, la fréquence du signal d'horloge local h est égale à A.dj, où A est par exemple égal à 8, soit h=16896 kHz. Dans ce cas, la fréquence de rythme D est obtenue par une division en fréquence, ici par 2, du signal d'horloge h engendré directement par l'oscillateur local 70, comme montré par une liaison en traits pointillés dans la base de temps 7 à la Fig. 1.

Par contre, si la fréquence de rythme D du signal résultant R est supérieure à la fréquence maximale $f_{max}$ de 70 MHz due à la technologie CMOS/1,5 $\mu$m, le signal d'horloge h est produit par une division de la fréquence de rythme engendrée par l'oscillateur local 70. Tel est le cas pour un multiplexeur qui justifie quatre signaux plésiochrones $l_1$ à $l_4$ au débit nominal $d_0$=34,368 Mbit/s en quatre signaux justifiés au débit dj=34,816 Mbit/s et qui multiplexe ces signaux justifiés en un signal résultant R au débit D=M.dj=139,264 Mbit/s. Pour cette seconde variante, l'entier A doit être égal à sa valeur minimale 2, afin de vérifier la condition C2, soit h = 2(34,816) = 69,632 MHz < 70 MRz. La fréquence du signal d'horloge h est égale à la moitié de la fréquence de rythme D.

Dans tous les cas, le signal d'horloge locale h est appliqué à une entrée d'horloge EH du circuit 5, et la base de temps 7 comporte des diviseurs de fréquence 71 reliés à l'oscillateur 70. En référence à la cinquième ligne de la Fig. 2, la fréquence du signal d'horloge locale h est supposée égale au double Adj=2dj du débit des signaux justifiés $sj_I$ à $sj_M$, selon l'exemple précité de la seconde variante.

Au moyen des diviseurs de fréquence 71, la base de temps 7 délivre par un bus 80 notamment un signal d'horloge à la fréquence D à une entrée d'horloge qui est commune aux étages d'un registre à décalage dans un convertisseur parallèle-série classique 8. En outre, un signal d'horloge à la fréquence dj est appliqué par les diviseurs de fréquence 71 à des entrées d'horloge de lecture $6L_I$ à $6L_M$ relatives aux mémoires tampons incluses respectivement dans les circuits de mémorisation et justification 6 dans les circuits de synchronisation $I_I$ à $I_M$, ainsi qu'à une entrée d'horloge 81 de portes ET incluses dans le convertisseur 8. D'autres entrées de ces portes ET reçoivent respectivement les signaux binaires justifiés $sj_I$ à $sj_M$ transmis respectivement par des sorties $61_I$ à $61_M$ desdites mémoires tampons.

Le circuit 6 comprend d'une manière connue, outre la mémoire tampon, des moyens de demande de justification, des moyens de lecture pour ordonner des justifications, et un circuit de comparaison de phase. Le circuit 6 est destiné à élever le débit initial $d_0$ au débit dj en insérant systématiquement des bits d'indication de justification et, à la demande, des bits de justification dans le signal binaire reformé SB à la sortie 41 du transcodeur 4. Les bits du signal reformé sont écrits dans la mémoire tampon du circuit 6 sous la commande du signal d'horloge régénérée $H_{RG}$ appliqué à une entrée d'horloge d'écriture 6E du circuit 6. Les bits du signal justifié $sj_m$ sont lus sous la commande du signal d'horloge appliqué à l'entrée $6L_m$.

Le convertisseur parallèle-série 8 multiplexe bit à bit les M signaux composants justifiés $sj_I$ à $sj_M$ en le signal résultant R et insère à une fréquence de trame un mot de verrouillage de trame et des bits de service.

Comme montré schématiquement à la Fig. 3, le circuit de régénération 5 comprend essentiellement, comme sensiblement décrit dans la FR-A-2564267, outre la porte OU 50, un comparateur de phase 51 sous la forme d'une bascule bistable, un générateur de signal d'inhibition d'impulsions d'horloge locale 52 sous la forme d'une bascule bistable, un circuit ET 53, et un circuit diviseur de fréquence 54 ayant un rapport A. On rappelle que l'entier A est égal à 2 relativement à la Fig. 2. Le circuit logique 5 vise à produire le signal d'horloge régénérée $H_{RG}$ qui est composé de séquences de créneaux ayant la période Tj correspondant au débit dj des signaux justifiés et dans lequel les séquences de créneaux sont décalées par des sauts de phase qui dépendent du déphasage entre un signal d'horloge à la fréquence $d_m$ du signal $s_m$ quasiment égale à $d_0$, et un signal d'horloge régénérée $H_0$ à la fréquence plus élevée dj égale à celle du signal justifié $sj_m$.

Le comparateur de phase 51 compare le signal redressé HDB+ combinant les signaux pseudo-binaires HDB+ et HDB- et sortant de la porte OU 50, avec un signal d'horloge régénérée $H_0$ ou avec tout autre signal $H'_0$ synchrone avec le signal $H_0$ et délivré par le circuit diviseur de fréquence 54 afin d'établir un signal de correction de phase SCP comportant des créneaux dont la largeur est proportionnelle audit déphasage. Le générateur 52 synchronise les fronts des créneaux du signal de correction SCP avec le signal d'horloge local h en un signal d'inhibition SI. A travers le circuit ET 53, chaque créneau du signal d'inhibition SI supprime une impulsion du signal d'horloge locale h, afin d'obtenir en sortie du circuit diviseur 54 le signal d'horloge régénérée $H_0$ et le signal $H'_0$ à appliquer au comparateur de phase 51. Les divers signaux précités sont indiqués dans la Fig. 2, pour un rapport de division A égal à 2 et des signaux $H_0$ et $H'_0$ en phase ayant des créneaux de largeurs respectives Tj/2 et Tj/4.

Comme cela apparaît dans la huitième ligne de la Fig. 2, le signal $H_0$ comporte des créneaux ayant strictement la largeur Tj/2=1/(2dj). Les créneaux sont en phase avec des transitions actives, ici montantes, du signal d'horloge locale h, et forment des séquences dans lesquelles les créneaux sont strictement espacés de la largeur Tj/2. Les séquences de créneaux sont décalées par des sauts de phase de largeur Tj/2 à une fréquence $A(dj-d_m)$ égale à celle du signal d'inhibition d'impulsion SI. La boucle de phase incluse dans le circuit 5 asservit ainsi la fréquence moyenne des créneaux du signal d'horloge régénéré $H_0$ sur le débit $d_m$ du signal entrant $s_m$. Les sauts de phase sur le signal d'horloge sont donc quasiment d'un demi-élément binaire, ce qui correspond à la valeur minimale 2 du rapport A.

Comparativement à la technique antérieure, les sauts de phase ayant une amplitude moyenne de Tj/2 dans le signal $H_0$ sont admissibles dans la mesure où les transitions actives du signal $H_0$, telles que les fronts montants des créneaux dans le signal $H_0$, interviennent toujours pendant les premières demi-périodes des éléments binaires des signaux HDB+ et HDB-, afin de distinguer les états "1" et "0" entre éléments binaires en vue du transcodage dans le transcodeur 4. Dans le cas présent, il est alors prévu en sortie du circuit 5, une bascule bistable 56 dont l'entrée de données D reçoit le signal $H_0$, l'entrée d'horloge inverse $\overline{C}$ reçoit le signal d'horloge locale h et la sortie Q produit un signal d'horloge régénérée $H_{RG}$. Le signal $H_{RG}$ montré à une dizième ligne de la Fig. 2 présente des fronts montants actifs sensiblement centrés au milieu des intervalles d'élément binaire du signal HDB+-, grâce au retard de Tj/4 créé par la bascule 56 déclenchée par les fronts descendants du signal h. En d'autres termes, les fronts actifs montants du signal $H_{RG}$ oscillent entre les limites des intervalles unitaires $T_m$ du signal HDB+ ou HDB-. Les sauts de phase dans le signal $H_{RG}$ sont tolérés par la nature même du principe de la justification dans le circuit 6 dont la mémoire tampon réalise un lissage de la gigue provoquée par lesdits sauts de phase, grâce au comparateur de phase entre le signal $H_{RG}$ utilisé en écriture et du signal de fréquence dj utilisé en lecture et appliqué à l'entrée $6L_m$.

Toutefois, en pratique, le signal bipolaire reçu $s_m$ est affecté d'une gigue de fréquence élevée qui se traduit par un glissement variable des créneaux à l'état "1" dans les signaux pseudo-binaires HDB+ et HDB-. Ce glissement affecte non seulement les positions temporelles des fronts montants et descendants de chacun des créneaux "1" d'une marque bipolaire $\underline{a}$ ou $\underline{b}$, mais également la largeur de ces créneaux qui peut être inférieure à $T_0/2$ ou bien supérieure à $T_0/2$. Il en résulte que si une transition active du signal régénéré $H_{RG}$ servant à la lecture d'un élément binaire intervient pendant l'une des demi-périodes nominales $T_0/2$ d'un élément binaire "1" où le signal HDB+ ou HDB- est égal à "0" alors qu'il devrait être égal à "1", ou pendant l'une des demi-périodes $T_0/2$ d'un élément binaire "0" où le signal HDB+ ou HDB- est égal à "1" alors qu'il devrait être égal à "0", l'élément binaire correspondant dans le signal binaire reformé SB est erroné. Ceci peut également induire d'autres erreurs lors du transcodage dans le transcodeur 4, inhérentes à la détection des viols de bipolarité.

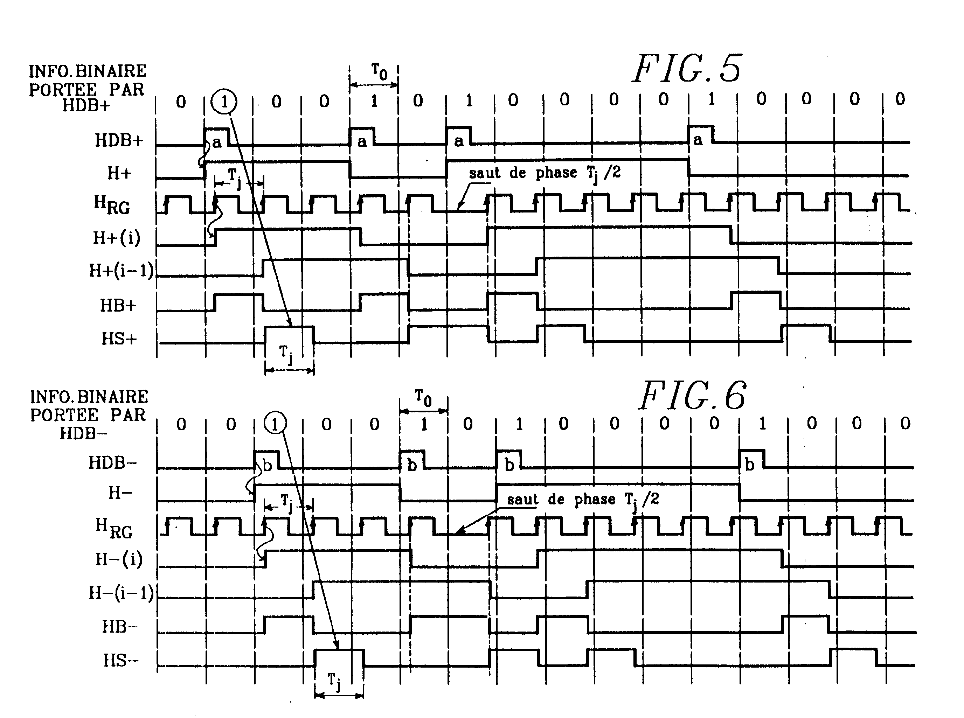

En addition à la gigue dans le signal bipolaire $s_m$, des fronts montants actifs du signal d'horloge régénéré sont compris dans les secondes demi-périodes des éléments binaires du signal pseudo-binaire HDB+ ou HDB-, comme montré aux Figs. 5 et 6, du fait des sauts de phase d'amplitude Tj/2. Dans ce cas, une lecture directe de l'élément binaire indiquerait un état "0" alors que l'élément binaire peut correspondre à "1" binaire.

Il en résulte que les méthodes connues pour lire et synchroniser des éléments binaires dans les signaux HDB+ et HDB-fondées sur des transitions actives du signal $H_{RG}$ telles que fronts montants, survenant strictement à l'intérieur de la première demi-période $T_0/2$ des éléments binaires ne peuvent être mises en oeuvre lorsque le signal d'horloge régénéré comprend des sauts de phase de Tj/2 à Tj et lorsque le signal reçu $s_m$ est affecté d'une gigue élevée.

Pour remédier à ces inconvénients, deux dispositifs de synchronisation et calibrage identiques 9+ et 9- selon l'invention sont respectivement interconnectés entre les sorties 31+ et 31- du convertisseur bipolaire-binaire 3 et les entrées 4+ et 40- du transcodeur HDBn/binaire 4, comme montré à la Fig. 1. L'un, 9+, de ces dispositifs est décrit ci-après en référence à la Fig. 4.

Selon la réalisation illustrée, le dispositif 9+ comprend quatre bascules bistables du type D, 91 à 94, et une porte OU-Exclusif 95. Une entrée d'horloge C1 de la première bascule 91 est reliée à la sortie 31+ du convertisseur 31 et reçoit le signal pseudo-binaire HDB+. Des entrées d'horloge C2, C3 et C4 des trois autres bascules 92, 93 et 94 sont reliées à la sortie Q de la bascule 56 dans le circuit 5 fournissant le signal d'horloge régénérée $H_{RG}$. Il est supposé que les bascules 91 à 94 réagissent à des fronts montants dits transitions actives "0" à "1" des signaux appliqués à leur entrée d'horloge.

La bascule 91 a une sortie inverse $\overline{Q}1$ reliée à son entrée D1. La sortie directe Q1 de la bascule 91 est reliée à l'entrée D2 de la seconde bascule 92. La première bascule 91 constitue un "déclencheur bistable" (de l'Anglais "toggle") fonctionnant en diviseur de fréquence par deux. Par suite, la sortie Q1 de la bascule 91 produit un signal logique H+, comme montré à une seconde ligne de la Fig. 5, qui change alternativement d'état en réponse aux transitions montantes dans le signal pseudo-binaire HDB+. Les transitions dans le signal H+ sont donc représentatives de "1" dans le signal HDB+. Même si un créneau "1" dans le signal HDB+ a une largeur relativement grande, jusqu'à atteindre ou sensiblement excéder la période $T_0$, le signal H+ n'est pas erroné. En effet, en raison des caractéristiques mêmes du code HDBn, un créneau "1" dans le signal HDB+ identifiant une marque bipolaire $\underline{a}$ est toujours suivie d'un état logique "0" identifiant soit une marque négative $\underline{b}$ soit un zéro logique. Le signal pseudo-binaire HDB+ ne contient donc jamais deux éléments consécutifs contenant des bits "1". Par conséquent, la bascule 91 détecte les fronts montants des marques $\underline{a}$, et le signal H+ change d'état en réponse à chaque front avant d'un créneau "1" dans le signal HDB+.

Dans le signal H+, les "1" binaires sont codés alternativement par des créneaux logiques "1" et "0" sur un intervalle de temps égal à $T_0$, et un "0" binaire est codé en le niveau logique du "1" binaire qui le précède.

Le signal H+ ne comporte donc plus de transition intermédiaire pendant des durées au moins égales à $2T_0$ à compter des fronts montants des marques $\underline{a}$. Selon le but recherché par l'invention, la lecture du niveau "1" dans le signal HDB+ peut alors être exécutée n'importe quand durant tout intervalle de temps unitaire $T_0$. Cette lecture effectuée dans la bascule suivante 92 est donc possible sous la commande d'un signal $H_{RG}$ même affecté de sauts de phase intermittents sensiblement d'un demi-élément binaire $T_0/2$ et comprenant des transitions actives "0" à "1" variant dans les intervalles unitaires $T_0$. Un signal H+(i) à la sortie Q2 de la bascule 92 et montré à une cinquième ligne de la Fig. 5 comporte des transitions alternativement de "0" à "1" et de "1" à "0" qui correspondent à celles du signal H+ et qui ont été mises en phase dans la bascule 92 avec les transitions montantes actives du signal d'horloge régénérée $H_{RG}$ appliqué à l'entrée d'horloge de la bascule 92. Cependant, les niveaux logiques dans le signal logique en phase H+ ne sont plus équivalents au niveau "1" lu dans le signal HDB+. Un transcodage est donc nécessaire et est effectué par la bascule 93 et la porte 95.

La sortie Q2 de la bascule 92 est reliée à l'entrée D3 de la bascule 93 et à une première entrée de la porte OU-Exclusif 95. La sortie Q3 de la bascule 93 est reliée à une seconde entrée de la porte 95. La sortie de la porte 95 est reliée à l'entrée de données D4 de la dernière bascule 94.

Les bascules 92 et 93 sont en série et constituent un registre à décalage à deux étages. La bascule 93 recopie l'état de la bascule 92 avec un retard égal à la "période" Tj du signal $H_{RG}$, aux sauts de phase près. Par conséquent, à une période donnée Tj, l'état du signal retardé H+(i-1) en sortie Q3 de la bascule 93 est égal à l'état du signal H+(i) pendant la période précédant la période donnée. Puisque le début d'un "1" binaire, correspondant à une marque a, succède à une transition dans le signal H+(i), une transition dans le signal H+(i-1) succédant à la transition du signal H+(i) délimite un bit "1" calibré à la largeur Tj.

La porte OU-Exclusif 95 compare le signal en phase H+(i) et le signal retardé H+(i-1) pour reproduire un véritable signal binaire HB+ qui correspond au signal pseudo-binaire HDB+, et dans lequel les marques a sont bien des créneaux "1" ayant une largeur calibrée en fonction de la période Tj, égale à Tj selon la réalisation illustrée, et établis en réponse aux fronts avant et arrière et donc aux transitions du signal logique en phase H+(i) qui sont parfaitement synchrones avec les fronts actifs montants du signal d'horloge régénérée $H_{RG}$. La porte 95 exécute l'algorithme suivant :

- si H+(i) ≠ H+(i-l), correspondant à HDB+=a, alors HB+=1, et
- si H+(i) = H+(i-l), correspondant à HDB+=0, alors HB+=0.

La dernière bascule 94 recalibre parfaitement à la largeur Tj avec fronts abrupts, les bits "1" du signal HB+ qui sont lus à la sortie de la porte 95 et qui sont susceptibles de présenter des durées de transitions quelque peu longues par la traversée de la porte 95 et d'inclure des impulsions parasites lors des changements d'état des bascules 92 et 93. La sortie Q4 de la bascule 94 transmet le signal synchronisé et calibré HS+ à l'entrée 40+ du transcodeur 4.

Le second dispositif de synchronisation et calibrage 9- effectue des opérations identiques à celles décrites ci-dessus vis-à-vis du signal HDB-. Des signaux H-, H-(i), H-(i-1), HB- et HS- produits dans le dispositif 9- sont montrés à la Fig. 6, et correspondent aux signaux H+, H+(i), H+(i-l), HB+ et HS+ respectivement.

Selon d'autres utilisations, le circuit de récupération de rythme et de mise en forme 345 avec les dispositifs 9+ et 9- peut être inclus dans n'importe quel dispositif recevant un signal bipolaire et traitant les signaux pseudo-binaires correspondants, tel qu'un commutateur numérique ou un terminal numérique, quel que soit le mode de transmission de l'information, mode-circuit ou mode-paquet, ou tel qu'un répéteur-régénérateur.

## Revendications

1. Dispositif (9+) pour synchroniser un signal pseudo-binaire (HDB+) avec un signal d'horloge ($H_{RG}$) en un signal synchronisé sortant (HB+),

    ledit signal pseudo-binaire (HDB+) ayant une période nominale ($T_0$) et comprenant des premiers et seconds éléments binaires, chacun des premiers éléments binaires (a) étant signalé par des premier et second niveaux logiques complémentaires (1, 0) respectivement sensiblement pendant des première et seconde demi-périodes nominales successives ($T_0/2$), et chacun des seconds éléments binaires ("0") étant signalé par ledit second niveau logique sensiblement pendant une période nominale ($T_0$), un premier élément binaire (a) étant toujours encadré par deux seconds éléments binaires ("0"),

    ledit signal d'horloge ($H_{RG}$) ayant une période (Tj) sensiblement inférieure à la période nominale ($T_0$) et offrant des sauts de phase périodiques afin que le signal d'horloge ait une période moyenne égale à la période nominale,

    caractérisé en ce que

    les sauts de phase du signal d'horloge ($H_{RG}$) ont une amplitude constante qui est au plus sensiblement égale à la période (Tj) du signal d'horloge,

    et en ce que le dispositif (9+) comprend

    des moyens (91) recevant le signal pseudo-binaire (HDB+) pour produire un premier signal logique (H+) ayant des états alternativement aux second et premier niveaux logiques en réponse à des transitions du second niveau logique ("0") au premier niveau logique ("1") dans le signal pseudo-binaire (HDB+),

    des moyens (92) commandés par le signal d'horloge ($H_{RG}$) pour mettre en phase lesdites transitions de niveau logique dans le premier signal logique (H+) avec des transitions actives prédéterminées ("0" à "1") du signal d'horloge ($H_{RG}$) de manière à établir un signal logique en phase (H+(i)), et

    des moyens (93, 95) commandés par le signal d'horloge pour fournir ledit signal synchronisé sortant (HB+) avec des créneaux qui sont au premier niveau logique ("1") et qui ont une largeur calibrée en fonction de la période (Tj) du signal d'horloge et qui sont respectivement établis en réponse aux transitions du signal logique en phase (H+(i)).

2. Dispositif conforme à la revendication 1, caractérisé en ce que les moyens pour produire le premier signal logique sont constitués par un diviseur de fréquence par deux (91).

3.  Dispositif conforme à la revendication 1, caractérisé en ce que les moyens pour produire le premier signal logique comprennent une bascule bistable ayant une entrée d'horloge (C1) recevant le signal pseudo-binaire (HDB+), une sortie inverse ($\overline{Q}$1) et une entrée de données (D1) reliées entre elles, et une sortie directe (Q1) produisant le premier signal logique (H+).

4.  Dispositif conforme à l'une quelconque des revendications 1 à 3, caractérisé en ce que les moyens pour mettre en phase comprennent une bascule bistable (92) ayant une entrée d'horloge (C2) recevant le signal d'horloge ($H_{RG}$), une entrée de données (D2) recevant le premier signal logique (H+), et une sortie (S2) fournissant le signal logique en phase (H+(i)).

5.  Dispositif conforme à l'une quelconque des revendications 1 à 4, caractérisé en ce que les moyens pour fournir le signal synchronisé sortant comprennent des moyens (93) pour retarder le signal logique en phase (H+(i)) de la période (Tj) du signal d'horloge ($H_{RG}$) en un signal retardé (H+(i-1), et des moyens (95) pour comparer le signal en phase (H+(i)) et le signal retardé (H+(i-1)) afin de produire les créneaux du signal synchronisé sortant lorsque le signal en phase et le signal retardé ont des niveaux logiques différents.

6.  Dispositif conforme à l'une quelconque des revendications 1 à 4, caractérisé en ce que les moyens pour fournir le signal synchronisé sortant comprennent
    une bascule bistable (93) ayant une entrée d'horloge (C3) recevant le signal d'horloge ($H_{RG}$) et une entrée de données (D3) recevant le signal logique en phase (H+(i)), et
    une porte OU-Exclusif (95) ayant une entrée recevant le signal en phase (H+(i)) et une autre entrée reliée à la sortie directe (Q3) de la bascule (93).

7.  Dispositif conforme à la revendication 6, caractérisé en ce que les moyens pour fournir le signal synchronisé sortant comprennent une autre bascule bistable (94) ayant une entrée d'horloge (C4) recevant le signal d'horloge ($H_{RG}$) et une entrée de données (D4) reliée à la sortie de la porte OU-Exclusif (95).

8.  Dispositif conforme à l'une quelconque des revendications 1 à 7, caractérisé en ce qu'il est interconnecté entre l'une (31+) des deux sorties d'un convertisseur bipolaire-binaire (3) et l'une (40+) des deux entrées d'un transcodeur HDB/binaire (4).

9.  Dispositif conforme à l'une quelconque des revendications 1 à 8, caractérisé en ce que le signal d'horloge ($H_{RG}$) est composé de séquences de périodes d'horloge (Tj) présentant entre elles des sauts de phase sensiblement égaux à une demi-période (Tj/2) du signal d'horloge ($H_{RG}$), les transitions actives du signal d'horloge étant comprises dans les périodes nominales d'élément binaire du signal pseudo-binaire (HDB+).

10. Dispositif conforme à l'une quelconque des revendications 1 à 9, caractérisé en ce que le débit nominal ($d_0$) du signal pseudo-binaire (HDB+) est approximativement de 35 Mbit/s, et en ce que ledit signal d'horloge ($H_{RG}$) est établi à partir d'un signal d'horloge locale (h) ayant une fréquence approximativement de 70 MHz.

## Patentansprüche

1.  Vorrichtung (9+) zur Synchronisation eines pseudobinären Signals (HDB+) mit einem Taktsignal ($H_{RG}$) zu einem synchronisierten Ausgangssignal (HB+),
    -   wobei das pseudobinäre Signal (HDB+) eine Nennperiode ($T_0$) aufweist und erste und zweite binäre Elemente umfaßt, wobei jedes der ersten binären Elemente (a) etwa während aufeinanderfolgender erster und zweiter Nennhalbperioden ($T_0$/2) jeweils durch erste und zweite komplementäre logische Pegel (1, 0) angezeigt wird, und jedes der zweiten binären Elemente ("0") durch den zweiten logischen Pegel etwa während einer Nennperiode ($T_0$) angezeigt wird, wobei stets ein erstes binäres Element (a) von zweiten binären Elementen ("0") eingerahmt ist,
    -   wobei das Taktsignal ($H_{RG}$) eine Periode (Tj) deutlich kleiner als die Nennperiode ($T_0$) aufweist und periodische Phasensprünge bietet, damit das Taktsignal eine mittlere Periode gleich der Nennperiode aufweist,
    dadurch **gekennzeichnet**, daß
    -   die Phasensprünge des Taktsignals ($H_{RG}$) eine konstante Amplitude aufweisen, die höchstens etwa gleich der Periode (Tj) des Taktsignals ist,
    -   und daß die Vorrichtung (9+) umfaßt
    -   Mittel (91), die das pseudobinäre Signal (HDB+) empfangen, um ein erstes logisches Signal (H+) zu erzeugen, das Zustände abwechselnd zu den zweiten und ersten logischen Pegeln ansprechend auf Übergänge des zweiten logischen Pegels ("0") zum ersten logischen Pegel ("1") im pseudobinären Signal (HDB+) aufweist,

- Mittel (92), die durch das Taktsignal ($H_{RG}$) gesteuert werden, um die logischen Pegelübergänge im ersten logischen Signal (H+) mit aktiven vorbestimmten Übergängen ("0" zu "1") des Taktsignals ($H_{RG}$) in Phase zu setzen derart, daß ein logisches Signal mit Phase (H+(i)) gebildet wird, und

- Mittel (93, 95), die durch das Taktsignal gesteuert werden, um das synchronisierte Ausgangssignal (HB+) mit Rechteckimpulsen zu liefern, die sich im ersten logischen Pegel ("1") befinden und die eine kallibrierte Größe abhängig von der Periode (Tj) des Taktsignals aufweisen und die jeweils ansprechend auf die Übergänge des logischen Signals in Phase (H+(i)) gebildet werden.

2. Vorrichtung nach Anspruch 1, dadurch **gekennzeichnet**, daß die Mittel zum Erzeugen des ersten logischen Signals durch einen Frequenzteiler durch zwei (91) gebildet sind.

3. Vorrichtung nach Anspruch 1, dadurch **gekennzeichnet**, daß die Mittel zum Erzeugen des ersten logischen Signals ein bistabiles Kippglied mit einem Takteingang (C1), der das pseudobinäre Signal (HDB+) empfängt, einem Inversausgang ($\overline{Q}1$) und einem Dateneingang (D1), die untereinander verbunden sind, und einem direkten Ausgang (Q1) aufweisen, der das erste logische Signal (H+) erzeugt.

4. Vorrichtung nach einem beliebigen der Ansprüche 1 bis 3, dadurch **gekennzeichnet**, daß die Mittel zum Phasensetzen ein bistabiles Kippglied (92) umfassen, das einen das Taktsignal ($H_{RG}$) empfangenden Takteingang (C2), einen den ersten logischen Pegel (H+) empfangenden Dateneingang (D2) und einen das logische Signal in Phase (H+(e)) liefernden Ausgang (S2) aufweist.

5. Vorrichtung nach einem beliebigen der Ansprüche 1 bis 4, dadurch **gekennzeichnet**, daß die Mittel zum Liefern des synchronisierten Ausgangssignals, Mittel (93) zum Verzögern des logischen Signals in Phase (H+(i)) mit der Periode (Tj) des Taktsignals ($H_{RG}$) zu einem verzögerten Signal (H+(i-1)) und Mittel (95) umfassen, um das Signal in Phase (H+(i)) und das verzögerte Signal (H+(i-1)) zu vergleichen, um Rechteckimpulse des synchronisierten Ausgangssignals zu erzeugen, wenn das Signal in Phase und das verzögerte Signal unterschiedliche logische Pegel aufweisen.

6. Vorrichtung nach einem beliebigen der Ansprüche 1 bis 4, dadurch **gekennzeichnet**, daß die Mittel zum Liefern des synchronisierten Ausgangssignals umfassen

- ein bistabiles Kippglied (93) mit einem das Taktsignal ($H_{RG}$) empfangenden Takteingang (C3) und einem das logische Signal in Phase (H+(i)) empfangenden Dateneingang (D3) und

- ein exklusives ODER-Glied (95), das einen das Signal in Phase (H+(i)) empfangenden Eingang und einen mit dem direkten Ausgang (Q3) des Kippgliedes (93) verbundenen weiteren Eingang aufweist.

7. Vorrichtung nach Anspruch 6, dadurch **gekennzeichnet**, daß die Mittel zum Liefern des synchronisierten Ausgangssignals ein weiteres bistabiles Kippglied (94) umfassen, das einen das Taktsignal ($H_{RG}$) empfangenden Takteingang (C4) und einen mit dem Ausgang des exklusiven ODER-Gliedes (95) verbundenen Dateneingang (D4) aufweist.

8. Vorrichtung nach einem beliebigen der Ansprüche 1 bis 7, dadurch **gekennzeichnet**, daß sie zwischen einem (31+) der beiden Ausgänge eines Bipolar-Binär-Umsetzers (3) und dem einen (40+) der beiden Eingänge eines HDB/Binär-Code-Umsetzers (4) angeschlossen ist.

9. Vorrichtung nach einem beliebigen der Ansprüche 1 bis 8, dadurch **gekennzeichnet**, daß sich das Taktsignal ($H_{RG}$) aus Taktperiodenfolgen (Tj) zusammensetzt, die untereinander Phasensprünge etwa gleich einer Halbperiode (Tj/2) des Taktsignals ($H_{RG}$) aufweisen, wobei die aktiven Übergänge des Taktsignals zwischen den Binärelement-Nennperioden des Binärelementes des pseudobinären Signals (HDB+) enthalten sind.

10. Vorrichtung nach einem beliebigen der Ansprüche 1 bis 9, dadurch **gekennzeichnet**, daß der Nenndurchsatz ($d_0$) des pseudobinären Signals (HDB+) annähernd 35 Bit/s ist und daß das Taktsignal ($H_{RG}$) ausgehend von einem lokalen Taktsignal (h) gebildet wird, das eine Frequenz annähernd 70 Megahertz aufweist.

**Claims**

1. Device (9+) for synchronizing a pseudo-binary signal (HDB+) with a clock signal ($H_{RG}$) into an outgoing synchronized signal (HB+),

   said pseudo-binary signal (HDB+) having

a nominal period ($T_0$) and comprising first and second binary elements, each of the first binary elements (a) being signalled by first and second complementary logic levels (1, 0) respectively substantially during first and second successive nominal half-periods ($T_0/2$), and each of the second binary elements ("0") being signalled by said second logic level substantially during a nominal period ($T_0$), a first binary element (a) always being flanked by two second binary elements ("0"), said clock signal ($H_{RG}$) having a period (Tj) substantially lower than the nominal period ($T_0$) and offering periodical phase jumps for the clock signal to have a mean period equal to the nominal period,

characterized in that

the clock signal phase jumps ($H_{RG}$) have a constant amplitude that is at most substantially equal to the clock signal period (Tj),

and in that the device (9+) comprises

means (91) receiving the pseudo-binary signal (HDB+) for providing a first logic signal (H+) having states alternately in the second and first logic levels in response to transitions from the second logic level ("0") to the first logic level ("1") in the pseudo-binary signal (HDB+),

means (92) controlled by the clock signal ($H_{RG}$) for phasing said logic level transitions in the first logic signal (H+) with predetermined active transitions ("0" to "1") of the clock signal ($H_{RG}$) thereby deriving a phased logic signal (H+(i)), and

means (93, 95) controlled by the clock signal for supplying said outgoing synchronized signal (HB+) with pulses which are at the first logic level ("1") and which have a width calibrated as a function of the period (Tj) of the clock signal and which are respectively derived in response to the transitions of the phased logic signal (H+(i)).

2. Device according to claim 1, characterized in that the first logic signal providing means are formed by a divide-by-two frequency divider (91).

3. Device according to claim 1, characterized in that the first logic signal providing means comprise a bistable flip-flop having a clock input (C1) receiving the pseudo-binary signal (HDB+), an inverse output (Q1) and a data input (D1) connected therebetween, and a direct output (Q1) providing the first logic signal (H+).

4. Device according to any one of claims 1 to 3, characterized in that the phasing means comprise a bistable flip-flop (92) with a clock input (C2) receiving the clock signal ($H_{RG}$), a data input (D2) receiving the first logic signal (H+), and an output (S2) supplying the phased logic signal (H+(i)).

5. Device according to any one of claims 1 to 4, characterized in that the outgoing synchronized signal supplying means comprise means (93) for delaying the phased logic signal (H+(i)) by the period (Tj) of the clock signal ($H_{RG}$) into a delayed signal (H+(i-1)), and means (95) for comparing the phased signal (H+(i)) and the delayed signal (H+(i-1)) thereby supplying the pulses of the outgoing synchronized signal when the phased signal and the delayed signal have different logic levels.

6. Device according to any one of claims 1 to 4, characterized in that the outgoing synchronized signal supplying means comprise a bistable flip-flop (93) having a clock input (C3) receiving the clock signal ($H_{RG}$) and a data input (D3) receiving the phased logic signal (H+(i)), and
an Exclusive-OR gate (95) having an input receiving the phased signal (H+(i)) and another input connected to the direct output (Q3) of the flip-flop (93).

7. Device according to claim 6, characterized in that the outgoing synchronized signal supplying means comprise another bistable flip-flop (94) having a clock input (C4) receiving the clock signal ($H_{RG}$) and a data input (D4) connected to the output of the Exclusive-OR gate (95).

8. Device according to any one of claims 1 to 7, characterized in that it is interconnected between one (31+) of the two outputs of a bipolar-to-binary converter (3) and one (40+) of the two inputs of a HDB/binary transcoder (4).

9. Device according to any one of claims 1 to 8, characterized in that the clock signal ($H_{RG}$) is comprised of clock period (Tj) sequences having phase jumps between them substantially equal to a half-period (Tj/2) of the clock signal ($H_{RG}$), the active transitions of the clock signal being included in the binary element nominal periods of the pseudo-binary signal (HDB+).

10. Device according to any one of claims 1 to 9, characterized in that the nominal bit rate ($d_0$) of the pseudo-binary signal (HDB+) is approximately 35 mbit/s, and in that said clock signal ($H_{RG}$) is derived from a local clock signal (h) having a frequency of approximately 70 MHz.

*FIG.1*

CIRCUIT DE SYNCHRONISATION

$2_1$ $1_1$ $6L_1$ $sj_1$
$\overline{s}_1^r$ $30_1$ $61_1$

BASE DE TEMPS

CIRCUIT DE SYNCHRONISATION $1_m$

OSCILLATEUR 55

OSCILLATEUR 70

CIRCUIT DE
RECUPERATION
D'HORLOGE ET DE
MISE EN FORME

DIVISEURS
DE
FREQUENCE
71

DISPOSITIF DE
SYNC. ET
CALIBRAGE
(FIG.4)
$9+$ HS+ 4
$40+$

$6L_m$

$31+$
C1+
$2_m$ HDB+
$\overline{s}_m^r$ CONVERTISSEUR
BIPOLAIRE-
BINAIRE h C1−
$30_m$ HDB−
3 $31−$

TRANSCODEUR
HDB /BINAIRE
41 60
SB

CIRCUIT DE MEMORISATION
ET JUSTIFICATION

7

80

DISPOSITIF
DE SYNC. ET
CALIBRAGE
$9−$
HS
$40−$

$H_{RG}$
EH Q56
$50+$ $50−$
6E

81

CONVERTISSEUR
PARALLELE-
SERIE
R

CIRCUIT DE REGENERATION
DE SIGNAL D'HORLOGE
(FIG.3)
5

$sj_m$
$61_m$
6 345
8

D=Mdj>Md$_0$

11

$2_M$ $1_M$ $6L_M$ $sj_M$
$\overline{s}_M^r$ CIRCUIT DE SYNCHRONISATION
$30_M$ $61_M$

MULTIPLEXEUR

EP 0 396 461 B1

FIG. 2

# FIG.3

CIRCUIT REGENERATION DE SIGNAL D'HORLOGE

# FIG.4

DISPOSITIF DE SYNCHRONISATION ET
CALIBRAGE DE SIGNAL PSEUDO-BINAIRE 9+

*FIG.5*

INFO. BINAIRE PORTEE PAR HDB+

| 0 | ① | 0 | 0 | $T_0$ 1 | 0 | 1 | 0 | 0 | 0 | 0 | 1 | 0 | 0 | 0 | 0 |

HDB+  a    a    a                a

H+        $T_j$        saut de phase $T_j/2$

$H_{RG}$

H+(i)

H+(i-1)

HB+

HS+    $T_j$

*FIG.6*

INFO. BINAIRE PORTEE PAR HDB−

| 0 | 0 | ① | 0 | 0 | $T_0$ 1 | 0 | 1 | 0 | 0 | 0 | 0 | 1 | 0 | 0 | 0 |

HDB−   b    b    b              b

H−        $T_j$        saut de phase $T_j/2$

$H_{RG}$

H−(i)

H−(i-1)

HB−

HS−    $T_j$

EP 0 396 461 B1